(19) **Europäisches Patentamt / European Patent Office / Office européen des brevets**

(11) **EP 4 772 843 A1**

(12) **EUROPÄISCHE PATENTANMELDUNG**

(43) Veröffentlichungstag:
08.07.2026 Patentblatt 2026/28

(21) Anmeldenummer: 25222947.1

(22) Anmeldetag: 12.12.2025

(51) Internationale Patentklassifikation (IPC):
**G01F 1/20** (2006.01) **G01F 1/80** (2006.01)

(52) Gemeinsame Patentklassifikation (CPC):
**G01F 1/206; G01F 1/80**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: 07.01.2025 DE 102025100332
07.02.2025 DE 102025104574

(71) Anmelder: **Schiffer, Stefanie
64289 Darmstadt (DE)**

(72) Erfinder: **Schiffer, Walter
verstorben (DE)**

(74) Vertreter: **Göring, Jan
Boehmert & Boehmert
Anwaltspartnerschaft mbB
Pettenkoferstraße 22
80336 München (DE)**

(54) **VORRICHTUNG UND VERFAHREN ZUM MESSEN EINER DURCHFLUSSMENGE**

(57) Eine Vorrichtung (100, 200, 300, 400) zum Messen einer Durchflussmenge eines Fließmediums umfasst einen geschlossenen Messbehälter (3) mit einer Eingangsöffnung (31), die eine Eingangsrichtung (E) für das Fließmedium definiert, und mit einem in einer Abgaberichtung (A) ausgerichteten Ausgangsöffnung (39) zum Abgeben des Fließmediums, und einen Messkörper (5), der in der Abgaberichtung (A) linearbeweglich in dem Messbehälter (3) gelagert ist, wobei das Fließmedium von der Eingangsöffnung (31) durch den Messkörper (5) zur Ausgangsöffnung (39) geführt wird und im Bereich des Messkörpers (5) eine Umlenkung von der Eingangsrichtung (E) zur Abgaberichtung (A) erfährt.

Fig. 4

**Beschreibung**

TECHNISCHES GEBIET

Die vorliegende Offenbarung bezieht sich auf eine Vorrichtung und ein Verfahren zur Messung der Durchflussmenge eines Fließmediums.

HINTERGRUND

Auf dem Gebiet der Durchflussmessung ist es üblich, dass verschiedene Arten von Sensoren und Messvorrichtungen eingesetzt werden, um die Durchflussmenge eines Fließmediums zu bestimmen. Bekannte Systeme umfassen typischerweise mechanische, akustische, magnetische oder optische Sensoren, die den Durchfluss eines Mediums durch einen Kanal messen. Manche Durchflussmesser, wie z.B. Turbinen- oder Flügelrad-Durchflussmesser, nutzen die Bewegung eines mechanischen Teils, um den Durchfluss zu erfassen.

Konventionelle Systeme zur Messung der Durchflussmenge als Volumenstrom pro Zeiteinheit (etwa: L/Min) verwenden entgegen der Fließrichtung geschrägte kegelförmige Schwebekörper. Diese Schwebekörper sind so in einem Kanal angeordnet konstruiert, dass sie einen Strömungswiderstand für das Fließmedium bilden und abhängig vom Volumenstrom einen Auftrieb erfahren. Der Schwebekörper bewegt sich in Abhängigkeit von der Durchflussmenge des Fließmediums in einem Messrohr nach oben oder unten. Die Position des Schwebekörpers im Messrohr gibt dabei Aufschluss über die Durchflussmenge des Mediums. Solche Systeme sind einfach und kostengünstig, haben jedoch auch ihre Nachteile.

Bei den bekannten Durchflussmesssystemen mit Schwebekörpern kann es zu Ungenauigkeiten kommen, insbesondere bei Medien wie Benzin mit temperaturabhängig variierender Dichte und Viskosität. Zur genauen Dosierung müssen temperaturabhängige Korrekturfaktoren berücksichtigt werden. Sie eignen sich kaum oder schlecht für das Messen von gasförmigem Fließmedium oder von heterogenen Fließmedien, also beispielsweise gas- oder festkörperbeladenen Flüssigkeiten.

DE 16 666 A betrifft einen Wasserverlust-Anzeiger. DE 41 04 937 A1 betrifft einen Flüssigkeitssensor, der auf das Vorhandensein einer Flüssigkeit in einer Leitung anspricht. US 2,776,567 A betrifft eine auf Strömung reagierende Vorrichtung zum Erzeugen einer Anzeige oder zum Ausführen einer Steuerungsoperation als Reaktion auf eine Flüssigkeitsströmung, die eine vorbestimmte Menge überschreitet.

GB 506,396 A betrifft einen Durchflussmesser für Flüssigkeiten, der auch bei sehr geringen Durchflussmengen funktioniert. GB 904,017 A betrifft ein Mittel zum Erfassen einer Flüssigkeitsströmung, das einerseits selbst großen Durchflussmengen wenig Strömungswiderstand entgegenstellt und das andererseits besonders geeignet zum Erfassen von geringen Flüssigkeitsströmungen ist, um beispielsweise versehentlich geöffnete Ventile in einer Versorgungsleitung anzuzeigen. SU 112 997 A1 beschreibt einen kompakten Durchflussmesser für niedrige Durchflussraten, der wegen einer Verbindung eines Raums oberhalb einer Membran mit einem Auslassstutzen über eine Hohlstange eines Schiebers nicht anfällig für Luftdruckänderungen ist.

GB 1 190 912 A betrifft Durchflussmesser und -regler für Flüssigkeiten. US 0 701 382 A eine Vorrichtung zum Anzeigen einer Durchflussrate von Flüssigkeiten in Rohren. US 3,357,244 A betrifft eine Vorrichtung zur Anzeige des Durchflusses von Fluid durch einen Hydraulikkreislauf.

US 1,039,904 A betrifft ein Ventil, das dazu ausgelegt ist, die Durchflussmenge zu erfassen und an jedem beliebigen Punkt in einer Leitung oder Hauptleitung eines Gas- oder Flüssigkeitsverteilungssystems einen konstanten Druckabfall zu erzeugen. US 2,388,248 A betrifft Flüssigkeitsmessgeräte, die dazu dienen, an einem entfernten Ort das Volumen einer Flüssigkeit in einem Behälter oder die Durchflussmenge einer Flüssigkeit in einer Leitung anzuzeigen. DE 27 22 239 B2 betrifft ein Durchflussmessgerät für Flüssigkeiten mit vom Eingangsdruck der durchströmenden Flüssigkeit in Öffnungsrichtung beaufschlagtem Schwebekörper, dessen Lage gegenüber einem Fixpunkt die Durchflussmenge anzeigt, wobei der Schwebekörper als in einer Bohrung des Aufnahmegehäuses geführter Kolben ausgebildet ist und gegen die Kraft einer Druckfeder Steuerquerschnitte freigibt und mit einem elektrischen Signal abgebenden elektrischen Wegaufnehmer gekoppelt ist. DE 37 23 359 A1 bezieht sich auf ein Druckregelventil mit einem Ventilgehäuse, das einen Ventilsitz und eine Ventilverschlussanordnung mit einer am Ventilgehäuse befestigten, einen einlassraum in dem Ventilgehäuse begrenzenden Membran aus gummielastischem Material enthält.

US 5,024,105 A betrifft einen Differenzdruck-Durchflussmesser mit variablem Querschnitt, der unempfindlich gegenüber Änderungen der Viskosität der Flüssigkeit ist.

Es ist ein der vorliegenden Erfindung zugrunde liegendes technisches Problem, eine Vorrichtung und ein Verfahren zur Messung einer Durchflussmenge bereitzustellen, das die Nachteile bekannter Systeme überwindet, und insbesondere eingerichtet ist um eine Durchflussmenge als Massenstrom pro Zeiteinheit (kg/Min) verlässlich und präzise zu bestimmen.

ZUSAMMENFASSUNG

Es ist ein Ziel der vorliegenden Erfindung, eine Vorrichtung zum Messen einer Durchflussmenge eines Fließmediums bereitzustellen, die einen oder mehrere der Nachteile der bekannten Vorrichtungen überwindet.

Die Erfindung betrifft eine Vorrichtung zur Messung der Durchflussmenge eines Fließmediums (kurz: Messvorrichtung). Diese Vorrichtung umfasst einen geschlossenen Messbehälter mit einer Eingangsöffnung, die eine Eingangsrichtung für das Fließmedium definiert, und einer Ausgangsöffnung, die in einer Abgaberichtung ausgerichtet ist, um das Fließmedium abzugeben. Vorzugsweise ist die Querschnittsweite der Ausgangsöffnung in etwa so groß wie, genau so groß wie oder größer als die Querschnittsweite der Eingangsöffnung. Es kann zweckmäßig sein, dass die Messvorrichtung in einem betriebsgemäßen Zustand keine weiteren Öffnungen für das Eintreten oder Abgeben des Fließmediums aufweist, als die Eingangsöffnung und die Ausgangsöffnung. In dem Messbehälter ist ein Messkörper beweglich gelagert, insbesondere linearbeweglich, vorzugsweise in der Abgaberichtung. Vorzugsweise kann sich der Messkörper in dem Messbehälter in der Abgaberichtung vor und zurück (bzw. beispielsweise auf und ab oder nach rechts und links) bewegen. Das Fließmedium, vorzugsweise das gesamte Fließmedium, wird von der Eingangsöffnung zur Ausgangsöffnung geleitet. Insbesondere sind der Messbehälter und der Messkörper derart aufeinander abgestimmt, dass das Fließmedium, vorzugsweise vollständig, durch den Messkörper hindurch von der Eingangsöffnung zur Ausgangsöffnung geleitet wird. Der Messbehälter und der Messkörper sind derart aufeinander abgestimmt, dass das Fließmedium im Bereich des Messkörpers eine Umlenkung erfährt, vorzugsweise von der Eingangsrichtung zur Abgaberichtung. Die Eingangsrichtung unterscheidet sich von der Abgaberichtung. Vorzugsweise ist die Eingangsrichtung quer zur Abgaberichtung orientiert. Die Eingangsrichtung kann relativ zur Abgaberichtung in einem Winkel im Bereich zwischen 10° und 170°, insbesondere zwischen 30° und 150°, vorzugsweise zwischen 45° und 135°, besonders bevorzugt zwischen 60° und 120°, orientiert sein. Die Messvorrichtung kann vorzugsweise dazu ausgelegt und eingerichtet sein, das Rückstoßprinzip zu nutzen, wobei das ausströmende Fließmedium den Messkörper in entgegengesetzter Richtung verlagert. Die Messvorrichtung nutzt die unmittelbaren Masseeigenschaften strömender Medien aus, nämlich Trägheit und Widerstand gegen Änderung seiner Bewegungsrichtung, d.h. nach dem Massenimpulssatz:

$$F = m \times V$$

wobei "F" die Kraft bezeichnet; "m" die Masse (beispielsweise des Fließmediums); und "V" die Geschwindigkeit des Fließmediums. Es entsteht eine der Strömungsrichtung entgegengesetzte Impulskraft, die dem Massendurchsatz in der Zeit direkt proportional ist (kp/min).

Der Messkörper kann eine zur Durchflussmenge des Fließmediums korrespondierende Auslenkung aus einer Ruhelage erfahren. Messkörper und Messgefäß können derart aufeinander abgestimmt sein, dass der Messkörper in dem Messgefäß eine vorbestimmte Ruhelage einnimmt, wenn kein Fließmedium durch das Messgefäß strömt, insbesondere wenn sich kein Fließmedium in dem Messgefäß befindet. Der Messkörper kann durch eine Rückstellkraft in die Ruhelage gedrängt werden. Der Messkörper kann beispielsweise unter Einwirkung einer Feder oder eines Magneten in die Ruhelage gedrängt werden. Alternativ oder zusätzlich kann der Messkörper durch sein Eigengewicht unter Einwirkung der Schwerkraft in die Ruhelage gedrängt werden, insbesondere bei solchen Ausführungen bei denen die Abgaberichtung in Richtung der Schwerkraft orientiert ist. Die Bestimmung der Verlagerung des Messkörpers aus der Ruhelage ermöglicht eine präzise Erfassung der durch den Massendurchsatz erzeugten Impulskräfte, die proportional zur Durchflussmenge sind. Ein Vorteil dieser Anordnung ist eine präzise Messung der Durchflussmenge, da die Bewegung des Messkörpers direkt proportional zur Menge des durchströmenden Mediums ist. Ein besonderer Vorteil ist die Eignung der Vorrichtung zur Messung von Durchflussmengen verunreinigter oder hochviskoser Fließmedien. Ein weiterer Vorteil ist die Möglichkeit, die Vorrichtung besonders kompakt zu gestalten. Dies kann insbesondere in Anwendungen von Vorteil sein, bei denen der Platz begrenzt ist.

Nach einer Ausführungsform enthält der Messbehälter der Vorrichtung einen Ausgleichsraum, der gegenüber der Ausgangsöffnung angeordnet ist. Der Messkörper, der in der Abgaberichtung beweglich im Messbehälter gelagert ist, kann bei einer Auslenkung aus seiner Ruhelage in den Ausgleichsraum hineinfahren. Der Ausgleichsraum dient als Pufferzone, die es dem Messkörper ermöglicht, eine von der Durchflussmenge des Fließmediums abhängige Stellung einzunehmen, ohne dass es zu einer Beeinträchtigung der Messgenauigkeit kommt. Der Ausgleichsraum kann in einem betriebsgemäßen Zustand der Messvorrichtung vorzugsweise vollständig mit dem Fließmedium gefüllt sein. Der Ausgleichsraum kann mit der Eingangsöffnung und/oder einem Innenraum des beispielsweise zumindest abschnittsweise rohrförmigen Messkörpers fluidisch kommunizieren. Beispielsweise kann der Ausgleichsraum mit der Eingangsöffnung durch einen Spalt, insbesondere einen Ringspalt, zwischen einer Innenseite des Messgefäßes und einer Außenseite des Messkörpers fluidisch verbunden sein. Alternativ oder zusätzlich kann der Ausgleichsraum durch eine Ausgleichsöffnung, wie eine Bohrung, fluidisch mit dem Innenraum des Messkörpers kommunizieren. Vorzugsweise ist die Querschnittsfläche der Ausgleichsöffnung und/oder des Spalts kleiner als die Querschnittsfläche von den Durchgangsöffnungen des Messkörpers. Die Fähigkeit des Messkörpers, in den Ausgleichsraum hineinzufahren, erlaubt der Vorrichtung auf Schwankungen im Fließmedium zu reagieren, ohne dass es zu einer Verfälschung der Messergebnisse kommt. Dies ist besonders vorteilhaft, wenn es um die Messung von Fließmedien mit variierenden Eigenschaften wie Dichte oder Viskosität geht.

Der Ausgleichsraum ermöglicht zudem eine gewisse Flexibilität in der Konstruktion der Vorrichtung, da er als zusätzlicher Raum für die Bewegung des Messkörpers dient und eine präzisere Kalibrierung und Anpassung der Messvorrichtung an unterschiedliche Betriebsbedingungen ermöglicht. Diese Merkmale machen die Vorrichtung besonders geeignet für Anwendungen, bei denen eine hohe Messgenauigkeit erforderlich ist.

Nach einer Ausführungsform ist die Vorrichtung zum Messen einer Durchflussmenge eines Fließmediums so gestaltet, dass der Ausgleichsraum durch eine fest mit dem Messkörper verbundene Barriere von der Ausgangsöffnung getrennt ist. Die feste Verbindung stellt sicher, dass die Barriere ihre Position relativ zum Messkörper beibehält, unabhängig von der Bewegung des Messkörpers innerhalb des Messbehälters. Die Barriere kann vollständig starr oder zumindest abschnittsweise formveränderbar sein. Die Barriere kann eine Struktur sein, die physisch mit dem Messkörper verbunden ist und eine Trennung zwischen dem Ausgleichsraum und der Ausgangsöffnung schafft. Optional kann die Barriere einstückig mit dem Messkörper, insbesondere einem Rohrabschnitt des Messkörpers, gebildet sein. An den unterschiedlichen Seiten der Barriere kann sich ein Druckunterschied einstellen, insbesondere zwischen dem Druck des Fließmediums an der Abgabeöffnung und dem Druck des Fließmediums im Ausgleichsraum. Die Barriere kann verschiedene Formen annehmen, wie beispielsweise eine Wand, eine Membran oder eine andere geeignete Struktur, die eine physische Trennung ermöglicht. Ein Vorteil ist die Reduzierung von Turbulenzen und Druckschwankungen im Ausgleichsraum, da die Barriere eine gleichmäßige Strömung des Fließmediums fördert. Dies führt zu einer stabileren und zuverlässigeren Messung. Darüber hinaus kann die feste Verbindung der Barriere mit dem Messkörper die strukturelle Integrität der Vorrichtung erhöhen, da die Barriere dazu beitragen kann, den Messkörper in seiner Position zu lagern und/oder zu stabilisieren. Dies kann insbesondere bei Anwendungen mit hohen Durchflussraten oder viskosen Fließmedien von Vorteil sein, da die Vorrichtung robust und widerstandsfähig gegenüber mechanischen Belastungen bleibt.

Nach einer Ausführungsform umfasst die Vorrichtung eine in dem Messbehälter geführte Kolbenplatte als Barriere. Die Kolbenplatte realisiert eine starre Barriere. Die Kolbenplatte kann als Ringfläche oder tellerförmige Barriere bezeichnet sein. Die Kolbenplatte kann so gestaltet sein, dass sie innerhalb des Messbehälters in der Abgaberichtung linear beweglich ist. Insbesondere kann sie eine Führung des Messkörpers bewirken. Form und Größe der Kolbenplatte können angepasst an die Innenseite des Messgefäßes, insbesondere im Bereich des Ausgleichsraums, ausgestaltet sein. Vorzugsweise ist die Kolbenplatte formkorrespondierend, insbesondere mit einer Gleit- oder Spiel-Passung, zu der Innenseite des Ausgleichsraums gebildet. Optional kann die Kolbenplatte mit einer Schürze ausgestattet sein, die sich vorzugsweise entgegen der Abgaberichtung erstreckt. Die Kolbenplatte kann eine oder mehrere Ausgleichsöffnungen aufweisen. Zwischen der Kolbenplatte und der Innenseite des Messgefäßes kann ein Ringspalt ausgebildet sein. Ein Vorteil der Kolbenplatte ist, dass sie die Wartung und Reinigung der Vorrichtung erleichtert, da sie leicht zugänglich und austauschbar ist. Ein Zugriff auf den Messkörper, insbesondere dessen Kolbenplatte, kann durch eine verschließbare Abdeckung des Messbehälters erfolgen, die den Ausgleichsraums zur Umgebung verschließt. Dies ist besonders wichtig in industriellen Anwendungen, wo die Vorrichtung regelmäßig gewartet werden muss, um eine kontinuierliche und präzise Messung und/oder Hygieneanforderungen zu gewährleisten.

Nach einer alternativen Ausführungsform umfasst die Vorrichtung zum Messen einer Durchflussmenge eines Fließmediums eine Barriere, die wenigstens eine sich zwischen dem Messkörper und dem Messbehälter gehaltene Membran umfasst. Es ist denkbar, dass die Vorrichtung zwei Membrane umfasst, die sich jeweils zwischen dem Messkörper und dem Messbehälter erstrecken. Eine erste Membran kann zwischen der oder den Durchgangsöffnungen des Messkörpers und dem Ausgleichsraum angeordnet sein. Eine zweite Membran kann zwischen der oder den Durchgangsöffnungen des Messkörpers und der Ausgangsöffnung angeordnet sein. Diese Membran dient als flexible Barriere. Die Membran kann den Messkörper in seiner Bewegung führen. Zusätzlich kann die Membran eine Abdichtung zwischen dem Ausgleichsraum und der Ausgangsöffnung gewährleisten. Die Membran ist so gestaltet, dass sie die axiale Bewegung des Messkörpers ermöglicht, während sie eine Leckage des Fließmediums verhindert. Vorrichtungen mit Membrantrennkörpern eignen sich besonders zur Messung gasförmiger oder niedrigviskoser Fließmedien, wie Wasserstoff. Die Membran kann aus Materialien bestehen, die beständig gegen chemische Einflüsse, sehr niedrige und/oder hohe Temperaturen sind, wodurch die Vorrichtung auch unter extremen Bedingungen einsetzbar ist. Darüber hinaus trägt die Membran dazu bei, den Druckverlust innerhalb der Vorrichtung zu minimieren, da sie eine reibungsarme Bewegung des Messkörpers ermöglicht. Zudem kann die Membran dazu beitragen, die Lebensdauer der Vorrichtung zu verlängern, da sie den Messkörper vor mechanischen Beschädigungen schützt und die Abnutzung durch Reibung reduziert. Schließlich bietet die Membran eine zusätzliche Sicherheitsfunktion, indem sie das Risiko von Leckagen verhindert.

Nach einer Ausführungsform weist die Vorrichtung zum Messen einer Durchflussmenge eines Fließmediums einen Messbehälter auf, der eine vorzugsweise rohrförmige Führung, insbesondere Linearführung, für den Messkörper enthält. Diese Führung dient dazu, den Messkörper in einer präzisen, vorzugsweise linearen Bewegung innerhalb des Messbehälters zu führen. Der Messkörper kann in der Abgaberichtung linear beweglich gelagert sein, und das Fließmedium wird von der Eingangsöffnung durch den Messkörper zur Ausgangsöffnung geführt, wobei es im Bereich des Messkörpers eine Umlenkung von der Eingangsrichtung zur Abgaberichtung erfährt. Die Führung stellt sicher, dass der Messkörper stabil und ohne seitliche Abweichungen bewegt wird, was die Genauigkeit der Durchflussmessung erhöht. Vorzugsweise ist der Messkörper zumindest abschnittsweise, insbesondere im Bereich eines Rohrabschnitts, formkorrespondierend, insbesondere mit einer Gleit- oder Spiel-Passung, zu der rohrförmigen Führung gebildet. Vorzugsweise ist die Führung zwischen der Eingangsöffnung und der Abgabeöffnung angeordnet. Die insbesondere rohrförmige Führung kann nahe der Abgabeöffnung angeordnet sein. Es kann zweckmäßig sein, die Führung in der Abgaberichtung gegenüber zum Aufnahmeraum anzuordnen. Die Ausgestaltung der Messvorrichtung mit Führung, insbesondere rohrförmiger Führung, minimiert mechanische Reibung und verhindert ein Verkanten des Messkörpers. Ferner kann eine Reduktion von Druckverlusten innerhalb des Messbehälters bewirkt werden, da der Messkörper durch die Linearführung einen klar definierten Strömungsweg bildet, was Turbulenzen und Verwirbelungen minimiert. Außerdem kann der Messkörper sich in der Führung frei bewegen, ohne den Fluss des Mediums unnötig zu behindern. Die rohrförmige Linearführung ermöglicht es auch, den Messkörper in einer kompakten und geschlossenen Bauweise zu integrieren, was die Vorrichtung insgesamt robuster und weniger anfällig für äußere Einflüsse macht. Diese Bauweise ist besonders vorteilhaft in industriellen Anwendungen, wo die Vorrichtung in rauen Umgebungen eingesetzt wird und eine hohe Beständigkeit gegen mechanische Belastungen und Umwelteinflüsse erforderlich ist.

Nach einer Ausführungsform der Erfindung umfasst die Vorrichtung zum Messen einer Durchflussmenge eines Fließmediums einen Messbehälter, der mit einem Sichtfenster ausgestattet ist, das es ermöglicht, die Relativstellung des Messkörpers innerhalb des Messbehälters abzulesen. Das Sichtfenster kann beispielsweise spaltförmig oder zylinderhülsenförmig sein. Dieses Sichtfenster erlaubt dem Benutzer eine direkte visuelle Überprüfung des Betriebszustands der Vorrichtung und ein Ablesen des Stands des Messkörpers. Am oder neben dem Sichtfenster kann eine Skala angeordnet sein, die eine zur Stellung des Messkörpers korrespondierende Durchflussmenge angibt. Das Sichtfenster kann aus transparenten Materialien wie Glas oder Kunststoff bestehen, die eine klare Sicht auf den Messkörper bieten, ohne die strukturelle Integrität des Messbehälters zu beeinträchtigen. Das Sichtfenster kann in Kombination mit geeigneten Dichtungen verwendet werden, um sicherzustellen, dass keine Leckagen auftreten, die die Messgenauigkeit beeinträchtigen könnten. Eine Messvorrichtung, insbesondere eine Messvorrichtung mit Sichtfenster, kann geeignete Dichtmittel aufweisen, um ein Austreten von Fließmedium aus dem Behälter und/oder ein Eindringen von Umgebungsmedium zu verhindern. Die Integration eines Sichtfensters ermöglicht ein einfaches und schnelles visuelles Ablesen der Lage des Messkörpers relativ zum Messbehälter. In Bezug auf die Erfindung, die auf dem Prinzip der Massenimpulserhaltung basiert, ermöglicht das Sichtfenster eine direkte Beobachtung der Bewegung des Messkörpers, der durch die Impulskraft des strömenden Mediums bewegt wird. Schließlich kann das Sichtfenster auch in Umgebungen eingesetzt werden, in denen eine elektronische Überwachung nicht praktikabel ist, wodurch die Vorrichtung in einer Vielzahl von Anwendungen eingesetzt werden kann, von der chemischen Verarbeitung bis hin zur Lebensmittelproduktion.

Nach einer Ausführungsform ist die Vorrichtung zum Messen einer Durchflussmenge eines Fließmediums so gestaltet, dass die Eingangsrichtung senkrecht zur Ausgangsrichtung ausgerichtet ist. Dies bedeutet, dass das Fließmedium zunächst in einer Richtung in den Messbehälter eintritt und dann in einer um 90 Grad abgelenkten Richtung aus dem Messbehälter austritt. Diese spezifische Ausrichtung der Eingangs- und Ausgangsrichtung bringt mehrere Vorteile mit sich. Erstens ermöglicht die rechtwinklige Umlenkung des Fließmediums eine einfache Bestimmung der Durchflussmenge, da die entstehende Impulskraft und die dadurch bewirkte Verlagerung des Messkörpers aus seiner Ruhelage, die durch die Änderung der Bewegungsrichtung des Mediums erzeugt wird, direkt proportional zum Massenstrom ist. Ferner ermöglicht die senkrechte Ausrichtung der Eingangs- und Ausgangsrichtung eine kompakte Bauweise der Vorrichtung, was die Integration in bestehende Systeme erleichtert und den Platzbedarf minimiert.

Nach einer Ausführungsform weist die Vorrichtung einen Messkörper auf, der einen Rohrabschnitt umfasst, der fluchtend zur Ausgangsöffnung ausgerichtet ist. Alternativ oder zusätzlich weist der Messkörper mindestens eine quer zur Ausgangsrichtung orientierte Durchgangsöffnung auf. Der Messkörper kann mehrere Durchgangsöffnungen aufweisen. Vorzugsweise sind sämtliche Durchgangsöffnungen quer, insbesondere senkrecht, zur Abgaberichtung ausgerichtet. Eine erste Durchgangsöffnung kann parallel (insbesondere in der Ruhelage fluchtend) zur Eingangsöffnung ausgerichtet sein. Eine zweite Durchgangsöffnung kann quer zur Eingangsöffnung ausgerichtet sein. Vorzugsweise ist die Querschnittsweite der wenigstens einen Durchgangsöffnung wenigstens so groß wie die Querschnittsweite der Eingangsöffnung. Es kann bevorzugt sein, dass die Durchgangsöffnung oder Durchgangsöffnungen eine Querschnittsweite aufspannen, die wenigstens doppelt so groß ist wie die der Eingangsöffnung. Der Begriff "Rohrabschnitt" bezieht sich auf einen Teil des Messkörpers, der als Rohr geformt ist und durch den das Fließmedium geleitet wird. Dieser Rohrabschnitt ist so ausgerichtet, dass er direkt zur Ausgangsöffnung führt, was bedeutet, dass das Fließmedium ohne zusätzliche Umlenkungen oder Richtungsänderungen durch diesen Abschnitt zur Ausgangsöffnung strömt. Die Barriere kann an dem Rohrabschnitt befestigt sein. Vorzugsweise weist der Rohrabschnitt eine lichte Weite auf, die etwa so groß oder wenigstens so groß ist wie die Querschnittsweite der Eingangsöffnung und/oder der Ausgangsöffnung. Dies kann den Strömungswiderstand reduzieren und die Effizienz der Durchflussmessung erhöhen, da weniger Energie für die Umlenkung des Fließmediums aufgewendet werden muss. Die Durchgangsöffnungen können dazu dienen, das Fließmedium in den Messkörper einzuleiten, bevor es zur Ausgangsöffnung geleitet wird. Diese Anordnung kann die Strömungsdynamik innerhalb des Messkörpers optimieren. Ein Vorteil dieser Ausführungsform ist die optimierte Ausnutzung des Rückstoßeffekts, was durch die fluchtende Ausrichtung des Rohrabschnitts zur Ausgangsöffnung erreicht wird. Dies kann zu einer präziseren und konsistenteren Messung der Durchflussmenge führen.

Die Messvorrichtung kann mit einem Stellglied zur Kalibrierung der Messvorrichtung ausgestattet sein. Das Stellglied ist bevorzugt stromabwärts des Messkörpers angeordnet. Das Stellglied kann insbesondere im Bereich der Ausgangsöffnung angeordnet sein. Als Stellglied für unterschiedliche Durchflussmengen oder Durchgansquerschnitte kann beispielsweise eine Blende oder eine Düse zum Einsatz kommen. Das Stellglied, d.h. die Blende und/oder die Düse, kann zur Kalibrierung verstellbar ausgelegt und eingerichtet sein, vorzugsweise manuell verstellbar. Ein verstellbares Stellglied kann mit einem Fixiermittel zum Fixieren in einer bestimmten Stellung ausgestattet sein. Alternativ kann die Messvorrichtung mit mehreren austauschbaren unverstellbaren Stellgliedern für unterschiedliche Durchflussmengen oder Durchgansquerschnitte ausgestattet sein.

Die Erfindung betrifft auch ein Verfahren zum Messen einer Durchflussmenge eines Fließmediums (Messverfahren). Mit dem Messverfahren kann insbesondere ein Massenstrom bestimmt werden. Bei dem Verfahren zum Messen einer Durchflussmenge wird das Fließmedium durch eine Eingangsöffnung in einer definierten Eingangsrichtung in einen Messbehälter geleitet und verlässt diesen durch eine Ausgangsöffnung in einer Abgaberichtung. Der Messkörper, der innerhalb des Messbehälters angeordnet ist, führt das Fließmedium von der Eingangsöffnung zur Ausgangsöffnung und bewirkt dabei eine Umlenkung des Fließmediums von der Eingangsrichtung zur Abgaberichtung. Diese Umlenkung ermöglicht die Messung der Durchflussmenge mithilfe des Rückstoßeffekts. Der Messkörper erfährt eine Auslenkung aus einer Ruhelage, die direkt mit der Durchflussmenge des Fließmediums korrespondiert. Diese Auslenkung ist ein Maß für die auf den Messkörper wirkende Impulskraft, die wiederum proportional zur Masse und Geschwindigkeit des Fließmediums ist. Die erfindungsgemäße Messung der Durchflussmenge ist besonders einfach, da keine zusätzlichen Messungen von Dichte, Viskosität oder Temperatur erforderlich sind, wie es bei konventionellen Differenzdruck-Durchflusssensoren der Fall ist. Ein Vorteil dieser Methode liegt darin, auch hochviskose oder verunreinigte Fließmedien messen zu können. Zudem ermöglicht die Auslenkung des Messkörpers eine direkte und präzise Bestimmung des Massendurchflusses, wodurch eine besonders genaue Dosierung des Fließmediums erreicht werden kann. Vorzugsweise kann das Messverfahren gemäß einer, mehrerer oder sämtlicher Funktionsweisen der oben beschriebenen Messvorrichtung durchgeführt werden. Das Messverfahren kann insbesondere unter Verwendung der oben beschriebenen Messvorrichtung durchgeführt werden. Das Verfahren ist nicht nur effizient und präzise, sondern auch kosteneffektiv, da es den Bedarf an zusätzlichen Sensoren und Messgeräten reduzieren kann.

Figur 1     zeigt eine erste Ausführungsform einer Vorrichtung zum Messen einer Durchflussmenge eines Fließmediums mit einem Messkörper, der in einem Messbehälter linearbeweglich gelagert ist.

Figur 2     zeigt eine zweite Ausführungsform einer Vorrichtung zum Messen einer Durchflussmenge eines Fließmediums, wobei der Messkörper mittels einer Membran oder zwei Membranen geführt ist.

Figur 3     zeigt eine dritte Ausführungsform einer Messvorrichtung, bei der das Messgefäß ein Sichtfenster aufweist.

Figur 4     zeigt eine vierte Ausführungsform eines Durchflussmessgeräts mit einem Messkörper, der in einem Messbehälter gelagert ist.

Zur Vereinfachung der Lesbarkeit sind in der folgenden Beschreibungen exemplarischer Ausführungen dieselben oder ähnlichen Komponenten mit denselben oder ähnlichen Bezugszeichen versehen.

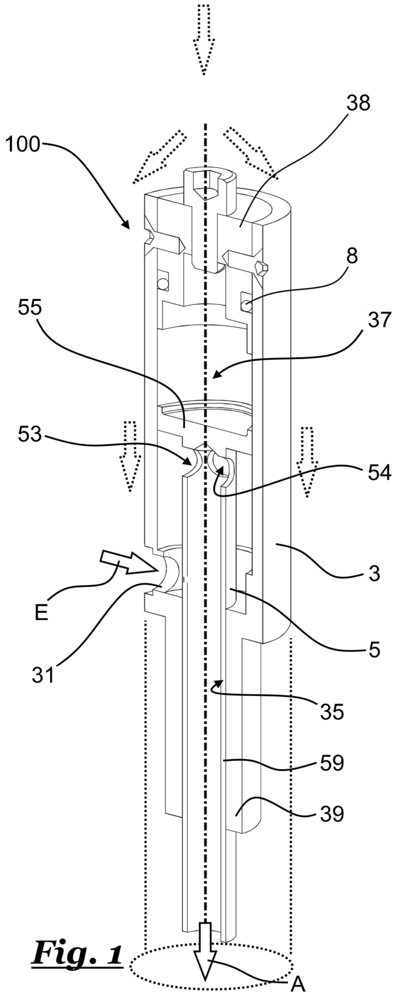

In Fig. 1 bis 4 sind mehrere Ausführungen des erfindungsgemäßen Messgeräts dargestellt, wobei für alle Ausführungsformen ein Messgefäß 3 und einen Messkörper 5 aufweisen. Sofern nicht ausdrücklich anders angegeben, sei klar, dass in Bezug auf einzelne Ausführungsformen beschriebene Komponenten auch in einer oder mehreren anderen Ausführungen einsetzbar sind.

Figur 1 zeigt eine Vorrichtung 100 zum Messen einer Durchflussmenge eines Fließmediums. Die Vorrichtung umfasst einen Messbehälter 3, der eine Eingangsöffnung 31 aufweist, die eine Eingangsrichtung E für das Fließmedium definiert. Der Messbehälter 3 ist weiterhin mit einer Ausgangsöffnung 39 versehen, die in einer Abgaberichtung A ausgerichtet ist, um das Fließmedium abzugeben. Bei dem abgebildeten Beispiel ist die Eingangsrichtung E senkrecht zur Abgaberichtung A.

Innerhalb des Messbehälters 3 ist ein Messkörper 5 angeordnet, der in der Abgaberichtung A linear beweglich gelagert ist. Der Messkörper 5 ist so gestaltet, dass das Fließmedium von der Eingangsöffnung 31 durch den Messkörper 5 zur Ausgangsöffnung 39 geführt wird. Dabei erfährt das Fließmedium im Bereich des Messkörpers 5 eine Umlenkung aus Eingangsrichtung E zur Abgaberichtung A.

Der Messkörper 5 weist einen Rohrabschnitt 59 auf, der fluchtend zur Ausgangsöffnung 39 ausgerichtet ist. Ferner verfügt der Messkörper 5 über mehrere kreisförmige Durchgangsöffnungen 53, 54, die quer zur Abgaberichtung A orientiert sind. Die erste Durchgangsöffnung 53 ist parallel zur Eingangsrichtung E ausgerichtet. Die zweite Durchgangsöffnungen 54 ist quer zur Eingangsrichtung E ausgerichtet. Der Messkörper kann mehrere erste und/oder zweite Durchgangsöffnungen haben.

Der Messbehälter 3 umfasst einen Ausgleichsraum 37, der gegenüber der Ausgangsöffnung 39 angeordnet ist. Der Messkörper 5 fährt bei Auslenkung aus seiner Ruhelage in den Ausgleichsraum 37 hinein. Der Ausgleichsraum 37 ist durch eine fest mit dem Messkörper 5 verbundene Kolbenplatte 55 von der Ausgangsöffnung 39 getrennt. Diese Kolbenplatte 55 dient als Barriere, die den Ausgleichsraum 37 von der Ausgangsöffnung 39 isoliert. Ein Ringspalt zwischen der Innenseite des Messbehälters 3 und der Kolbenplatte 55 oder eine Ausgleichsöffnung in der Barriere können eine fluidische Kommunikation des Ausgleichsraums 37 mit dem Inneren des Messkörpers 5 herstellen (nicht im Detail dargestellt).

Die dem Ausgleichsraum 37 zugewandte Oberseite der Kolbenplatte 55 hat eine Fläche, die im Wesentlichen der Summen der lichten Weite des Rohrabschnitts 59, dessen Wandstärke und der Fläche der Unterseite der Kolbenplatte 55 entspricht, welche die Eingangskammer begrenzt, in die die Eingangsöffnung 31 mündet. Das Fließmedium fließt von der Eingangsöffnung 31 quer zur Abgaberichtung A durch die Eingangskammer zum Messkörper 5. Das Fließmedium fließt weiter quer zur Abgaberichtung A von der Eingangskammer durch die Durchgangsöffnungen 53, 54 in den Messkörper 5 hinein. Im Messkörper 5 wird das Fließmedium in die Abgaberichtung A umgelenkt. In dem Messkörper 5 und daraus hinaus fließt das Fließmedium in der Abgaberichtung A und drängt dabei den Messkörper gemäß dem Rückstoßprinzip aus seiner Ruhelage aus.

Der Messbehälter 3 ist mit einer rohrförmigen Linearführung 35 ausgestattet, die den Messkörper 5 in seiner Bewegung führt. Dies ermöglicht eine präzise und kontrollierte Bewegung des Messkörpers 5 in der Abgaberichtung A.

Bei der in Figur 1 abgebildeten exemplarischen Ausführungsform ist ein Messkörper 5 abgebildet, dessen ausgangsseitiger Rohrabschnitt 59 durch die Ausgabeöffnung hindurch ragt 39. Es sei klar, dass der Rohrabschnitt 59 derart kürzer und/oder der ihn radial umgebende Abschnitt des Messbehälters derart länger sein kann als abgebildet, dass der Rohrabschnitt 39 nicht heraus ragt. Alternativ kann in Fließrichtung hinter dem Ausgang ein punktiert angedeuteter Raum vorgesehen sein.

Der Messbehälter 3 ist an seinem zur Austrittsöffnung 39 gegenüberliegenden Ende durch eine Abdeckung verschlossen. Die Abdeckung 38 kann für einen Zugriff aufs Innere des Messbehälters 3, beispielsweise zum Einsetzen oder Herausnehmen des Messkörpers 5 oder zum Warten oder Reinigen der Messvorrichtung 100 gelöst werden. An der Abdeckung 38 ist ein Dichtring 8 vorgesehen.

Es ist denkbar, dass die Führung des Fließmediums zur Eingangsöffnung 31 durch einen den Messbehälter 3 umgebenden Ringkanal erfolgt (durch punktierte Pfeile angedeutet). Das Fließmediums kann in dem Ringkanal parallel zur Abgaberichtung A strömen. Aus dem Ringkanal kann das Fließmedium durch eine oder mehrere Eingangsöffnung 31 in der Eingangsrichtung E in den Messbehälter 3 strömen (nicht näher dargestellt).

Die Vorrichtung nutzt das Prinzip des Massenimpulserhaltungsgesetzes für fluide Medien, um die Durchflussmenge zu messen. Die Impulskraft, die durch die Umlenkung des Fließmediums erzeugt wird, ist direkt proportional zum Massendurchsatz des Mediums. Diese Kraft bewirkt eine axiale Auslenkung des Messkörpers 5 aus einer Ruhelage (ohne Durchfluss), deren Größe ein Maß für den Durchfluss darstellt.

Insgesamt bietet die Vorrichtung eine effiziente Möglichkeit, die Durchflussmenge eines Fließmediums zu messen, indem sie die unmittelbaren Masseeigenschaften des strömenden Mediums ausnutzt. Die Konstruktion vermeidet unnötige Druckverluste und ermöglicht eine direkte Messung des Massendurchflusses, ohne dass zusätzliche Messungen von Dichte, Viskosität oder Temperatur erforderlich sind.

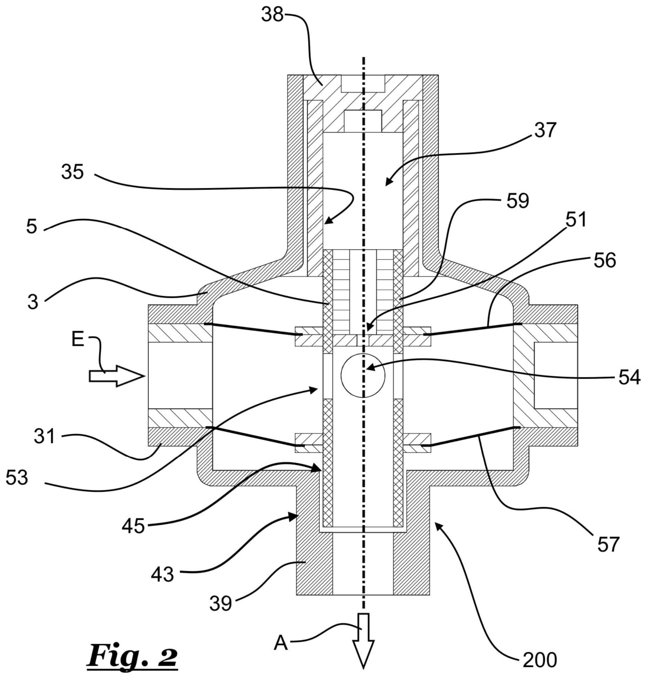

Figur 2 zeigt eine schematische Darstellung einer Vorrichtung 200 zum Messen einer Durchflussmenge eines Fließmediums. Die Vorrichtung umfasst einen geschlossenen Messbehälter 3, der eine Eingangsöffnung 31 und eine Ausgangsöffnung 39 aufweist. Die Eingangsöffnung 31 definiert eine Eingangsrichtung E für das Fließmedium, während die Ausgangsöffnung 39 in einer Abgaberichtung A ausgerichtet ist.

Innerhalb des Messbehälters 3 ist ein Messkörper 5 angeordnet, der in der Abgaberichtung A linear beweglich gelagert ist. Das Fließmedium wird von der Eingangsöffnung 31 durch den Messkörper 5 zur Ausgangsöffnung 39 geführt und erfährt im Bereich des Messkörpers 5 eine Umlenkung von der Eingangsrichtung E zur Abgaberichtung A.

Der Messbehälter 3 umfasst einen Ausgleichsraum 37, der gegenüber der Ausgangsöffnung 39 angeordnet ist. Der Messkörper 5 fährt bei Auslenkung aus seiner Ruhelage in den Ausgleichsraum 37 hinein. Der Ausgleichsraum 37 ist durch eine fest mit dem Messkörper 5 verbundene Barriere aus Membranen 56, 57 von der Ausgangsöffnung 39 getrennt. Die Membranen 56, 57 bewirken gemeinsam eine linearbewegliche Lagerung des Messkörpers 5 im Messbehälter 3, die durch die Führung 35 unterstützt wird. Der Messkörper 5 umfasst einen Rohrabschnitt 59, der fluchtend zur Ausgangsöffnung 39 ausgerichtet ist.

Der Messkörper 5 weist wenigstens eine quer zur Ausgangsrichtung A orientierte Durchgangsöffnung 54 sowie eine in der Eingangsrichtung E orientierte Durchgangsöffnung 53 auf. Die Durchgangsöffnungen 53, 54 sind in Bezug auf die Abgaberichtung A zwischen den Membranen 56, 57 angeordnet. Die erste Membran 56 ist zwischen dem Ausgleichsraum 37 und den Durchgangsöffnungen 53, 54 angeordnet. Die zweite Membran ist zwischen den Durchgangsöffnungen 53, 54 und der Ausgangsöffnung 39 angeordnet. Durch die Membrane 56, 57 ist der Innenraum des Messbehälters 3 in drei Kammern unterteilt. Die Eingangsöffnung 31 mündet in eine Eingangskammer zwischen den Membranen. Die Ausgangsöffnung 39 mündet in eine Ausgangskammer, die durch das Gehäuse des Messbehälters 3 und die zweite Membran 57 begrenzt ist. Die Ausgleichskammer 37 erstreckt sich zwischen der ersten Membran 56 und dem Gehäuse des Messbehälters 3.

Der Messkörper 5 weist eine Ausgleichsöffnung 51 auf, die eine fluidische Verbindung zwischen der Ausgleichskammer 37 und dem Innenraum des zur Austrittsöffnung 39 offenen Rohrabschnitts 59 bereitstellt. Durch die Ausgleichsöffnung 51 kann eine Druckentlastung erfolgen. Die Querschnittsweite der Ausgleichsöffnung 51 ist wesentlich kleiner als die Durchgangsöffnungen 53, 54 oder die lichte Weite des ausgangsseitigen Rohrabschnitts 59.

Das Fließmedium tritt durch die Eingangsöffnung 31 in den Messbehälter 3 ein, wird durch den Messkörper 5 zur Ausgangsöffnung 39 geführt und verlässt den Messbehälter 3 in der Abgaberichtung A. Dabei erfährt der Messkörper 5 eine zur Durchflussmenge des Fließmediums korrespondierende Auslenkung aus seiner Ruhelage.

Vor der Ausgangsöffnung 39 kann das Fließmedium durch einen Ausgangsrohrabschnitt 45 des Messkörpers 5 geführt werden, der in einem Aufnahmeabschnitt 43 des Messbehälters lose gelagert ist. Insbesondere kann der Ausgangsrohrabschnitt 45 in dem Aufnahmeabschnitt mit mehr Spiel gelagert sein als im Bereich der Linearführung 35. Der Messbehälter kann vor der Ausgangsöffnung einen Aufnahmeabschnitt 43 mit erweitertem Querschnitt aufweisen. Alternativ kann der Messkörper 5 ohne Ausgangsrohrabschnitt 45 gebildet sein (nicht im Detail dargestellt). Ein Messkörper 5 mit Membranen 56, 57, der frei von einem Ausgangsrohrabschnitt 45 gebildet ist, kann in Fließrichtung ausgangsseitig durch die zweite Membran 57 sowie gegebenenfalls eine am Messkörper zum Befestigen der zweiten Membran 57 gebildeten Befestigungsabschnitt, wie einen Flanschabschnitt, begrenzt sein.

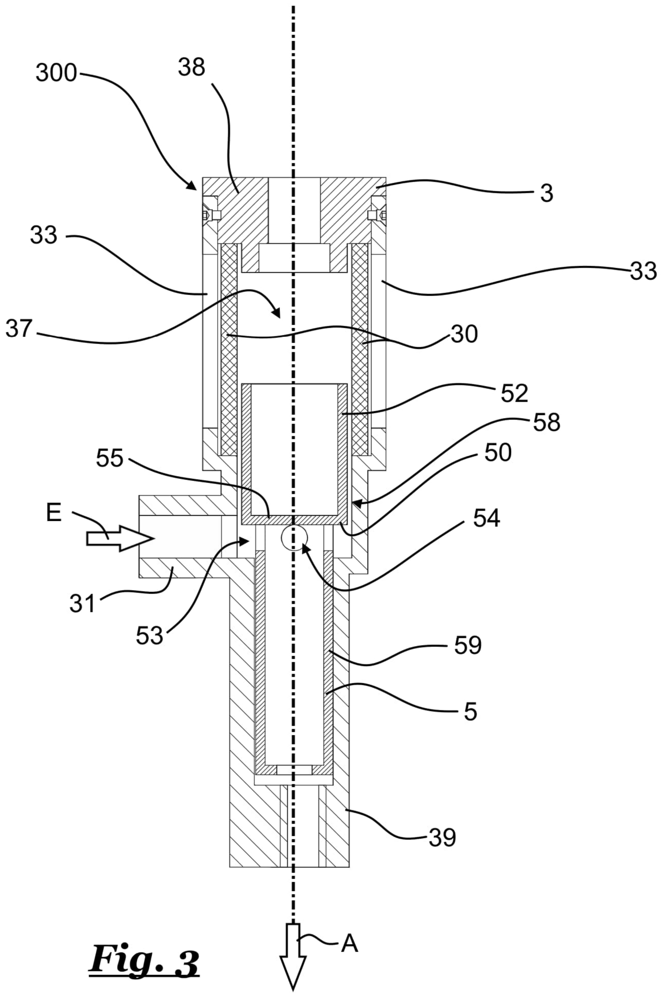

Figur 3 zeigt eine schematische Darstellung einer Vorrichtung 300 zum Messen der Durchflussmenge eines Fließmediums, die auf dem Prinzip der Massenimpulserhaltung basiert. Die Vorrichtung umfasst einen Messbehälter 3, der eine Eingangsöffnung 31 und eine Ausgangsöffnung 39 aufweist. Der Messkörper 5 ist innerhalb des Messbehälters 3 in Abgaberichtung A linear beweglich gelagert.

Der Messbehälter 3 ist mit einem Sichtfenster 30 ausgestattet, das ein direktes Ablesen der Position des Messkörpers 5 ermöglicht. Die Eingangsöffnung 31 definiert die Eingangsrichtung E, in der das Fließmedium in den Messbehälter 3 eintritt. Das Fließmedium wird durch eine Durchgangsöffnung 53, die parallel zur Eingangsrichtung E verläuft, in den Messkörper 5 geleitet. Der Messkörper 5 weist einen Rohrabschnitt 59 auf, der fluchtend zur Ausgangsöffnung 39 ausgerichtet ist.

Im Bereich des Messkörpers 5 erfolgt eine Umlenkung des Fließmediums von der Eingangsrichtung E zur Abgaberichtung A. Diese Umlenkung erzeugt eine Impulskraft, die proportional zur Durchflussmenge des Fließmediums ist. Der Messkörper 5 erfährt eine Auslenkung aus seiner Ruhelage, die ein Maß für den Massendurchfluss darstellt.

Der Messkörper 5 ist mit einer Kolbenplatte 55 ausgestattet, die als Barriere fungiert und den Ausgleichsraum 37 vom restlichen Messbehälter 3 trennt. Die Kolbenplatte 55 ist an der zur Abgabeöffnung 39 abgewandten Seite mit einer Schürze 52 ausgestattet. Die Schürze 52 endet im Bereich des Sichtfensters 30. Anhand der Lage der Schürze 52 kann, beispielsweise mittels einer (nicht näher dargestellten) Skala am Sichtfenster 30 eine Durchflussmenge abgelesen werden. Das Sichtfenster 30 ist in dem abgebildeten Beispiel hohlzylindrisch und durch die Abdeckung 38 fest am Messbehälter 3 gehalten. Der Messbehälter 3 kann nach Art einer Laterne geformt sein. Der Messbehälter 3 weist in seiner radialen Außenwand Durchbrüche zwischen Stegen 33 auf, sodass ein Benutzer auf und durch das Sichtfenster 30 blicken kann.

Alternativ zu der abgebildeten Ausführung kann ein Oberteil aus einem transparenten Material, insbesondere einem Kunststoffmaterial oder einem Glasmaterial vorgesehen sein. Das Oberteil kann dazu ausgelegt sein, den Ausgleichsraum 37 vollumfänglich radial zu umgeben. Zusätzlich oder alternativ kann das Oberteil dazu ausgelegt sein, den Ausgleichsraum 37 gegenüber der Abgabeöffnung 39 zu begrenzen. Das Oberteil ist vorzugsweise einstückig gebildet. Das Oberteil kann in Funktionsunion als Sichtfenster und Linearführung dienen. Ein kuppel- oder domförmiges Oberteil kann beispielsweise anstelle des Sichtfensters 30, der Stege 33 und der Abdeckung 38 sowie gegebenenfalls anstelle der Linearführung 35 vorgesehen sein. Es sei klar, dass ein derartiges Oberteil aus transparentem Material auch bei den anderen Ausführungen, beispielsweise bei der Ausführung vorgesehen sein kann. Das Oberteil kann mit einem im Übrigen aus einem insbesondere aus Gussmaterial gebildeten Kunststoff- oder Metallgehäuse des Messbehälters 3 abdichtend verbunden sein, beispielsweise unter Verwendung eins Dichtmittels, wie eine Flachdichtung.

Der Messkörper 5 hat an der zur Schürze 52 gegenüberliegenden Unterseite der Kolbenplatte 55 eine Ringschulter 50, die die Eingangskammer begrenzt. Die dem Ausgleichsraum 37 zugewandte Oberseite der Kolbenplatte 55 hat zusammen mit der Wandstärke der Schürze 52 eine Fläche, die der der lichten Weite des Rohrabschnitts 59, dessen Wandstärke und der Fläche der Ringschulter 50 an der Unterseite der Kolbenplatte 55 entspricht.

Außenumfänglich ist zwischen der Schürze 52 und der Innenwand des Messbehälters 3 im Bereich der Ausgleichskammer 37 ein Ringspalt 58 gebildet, durch den das Fließmedium aus der Eingangskammer in den Ausgleichsraum gelangen kann. Die Querschnittsweite des Ringspalts 58 ist wesentlich kleiner als die Durchgangsöffnungen 53, 54 oder die lichte Weite des ausgangsseitigen Rohrabschnitts 59.

Die Durchgangsöffnungen 53, 54 durchdringen die Wand des Rohrkörpers 59 quer zur Abgaberichtung A, damit das Fließmedium von der Eingangsöffnung 31 in den Messkörper hineinströmen kann. Das Fließmedium tritt schließlich durch die Ausgangsöffnung 39 aus, nachdem es den Rohrabschnitt 59 passiert hat. Die Vorrichtung nutzt die Trägheit und den Widerstand des Fließmediums gegen Richtungsänderungen, um den Massendurchfluss direkt zu messen, ohne zusätzliche Messungen von Dichte, Viskosität oder Temperatur zu benötigen.

Die Rückstellkraft des Messkörpers 5 kann durch Schwerkraft, Federkraft oder magnetische Kräfte gewährleistet werden. Beispielsweise kann der Messkörper durch die Schwerkraft in seine Ruhelage (vgl. Fig. 3) gedrängt werden, insbesondere wenn beispielsweise bei den Ausführungen der Vorrichtungen 100, 200 oder 300 die Abgaberichtung A entsprechend der Schwerkraft ausgerichtet ist.

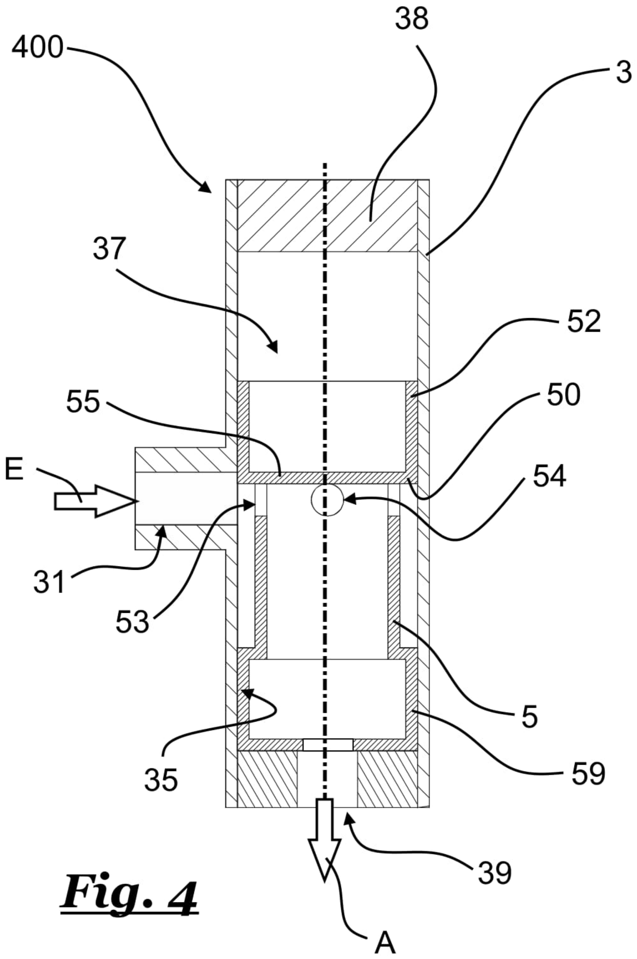

Figur 4 zeigt eine schematische Darstellung einer Vorrichtung 400 zum Messen der Durchflussmenge eines Fließmediums. Die Vorrichtung umfasst einen Messbehälter 3, der eine Eingangsöffnung 31 und eine Ausgangsöffnung 39 aufweist. Die Eingangsöffnung 31 definiert eine Eingangsrichtung E, während die Ausgangsöffnung 39 in einer Abgaberichtung A ausgerichtet ist. Innerhalb des Messbehälters 3 ist ein Messkörper 5 angeordnet, der in der Abgaberichtung A linear beweglich gelagert ist.

Der Messbehälter 3 ist bei der in Figur 4 dargestellten Ausführung als Rohr mit konstantem Querschnitt gebildet. Radial außenseitig am hohlzylindrischen Messbehälter 3 ist ein Stutzen für die Eingangsöffnung 31 angeformt. Die Oberseite des Messbehälters 3 ist durch einen zylindrische Abdeckung 38 verschlossen. An der Unterseite des Messbehälters 3 ist ein Einsatz eingebracht, der den hohlzylindrischen Messbehälter 3 mit Ausnahme der Abgabeöffnung 39 verschließt.

Der Messkörper 5 weist bezüglich der Abgaberichtung drei unterschiedliche Abschnitte auf. Am zur Abgaberichtung entfernten Ende hat der Messkörper 5 eine Kolbenplatte 55 mit Schürze 52. Die Schürze 52 ist gleitend an der Innenseite des rohrförmigen Messbehälters 3 gelagert. Unterhalb der Kolbenplatte 55 hat der Messkörper 5 einen mittleren Abschnitt, dessen Rohrwand von der Innenseite des rohrförmigen Messbehälters 3 beabstandet ist, sodass der mittlere Abschnitt des Messkörpers 5 von einer ringförmigen Eingangskammer umgeben ist, in die die Eingangsöffnung 31 mündet. Im mittleren Abschnitt des Messkörpers 5 sind die Durchgangsöffnungen 53, 54 angeordnet. Am ausgangsseitigen Ende hat der Messkörper 5 einen Endabschnitt, der radial außenseitig gleitend an der Innenseite des rohrförmigen Messbehälters 3 gelagert ist. Der Endabschnitt hat eine zur Ausgangsöffnung 39 fluchtende Öffnung.

Der mittlere Abschnitt des Messkörpers 5 ist schmaler als die gegenüberliegenden Endabschnitte, die in bzw. entgegen der Richtung der Abgabeöffnung 39 orientiert sind, und die innenseitig an dem glatten Außenrohr gleiten, das den Messbehälter 3 radial außenseitig begrenzt. Im Querschnitt hat der Messkörper 5 in dem in Figur 5 dargestellten Ausführung also eine symmetrische Grundgestalt.

Der Messkörper 5 ist so gestaltet, dass das Fließmedium von der Eingangsöffnung 31 durch den Messkörper 5 zur Ausgangsöffnung 39 geführt wird. Dabei erfährt das Fließmedium im Bereich des Messkörpers 5 eine Umlenkung von der Eingangsrichtung E zur Abgaberichtung A. Diese Umlenkung wird durch die Anordnung der Durchgangsöffnungen 53 und 54 im Messkörper 5 ermöglicht. Die Durchgangsöffnung 53 ist parallel zur Eingangsrichtung E orientiert, während die Durchgangsöffnung 54 quer zur Abgaberichtung A ausgerichtet ist.

Der Messkörper 5 ist mit einem Rohrabschnitt 59 ausgestattet, der fluchtend zur Ausgangsöffnung 39 ausgerichtet ist. Dies ermöglicht eine effiziente Führung des Fließmediums zur Ausgangsöffnung 39. Der Messkörper 5 ist zudem mit einer Kolbenplatte 55 ausgestattet, die als Barriere fungiert und den Ausgleichsraum 37 von der Ausgangsöffnung 39 trennt. Diese Kolbenplatte 55 ist fest mit dem Messkörper 5 verbunden und gewährleistet eine präzise Führung des Messkörpers 5 innerhalb des Messbehälters 3.

Der Messbehälter 3 ist mit einer rohrförmigen Linearführung 35 ausgestattet, die eine reibungsarme Bewegung des Messkörpers 5 in der Abgaberichtung A ermöglicht. An der Führung 35 stützen sich der obere und der untere Endabschnitt des Messkörpers 5 ab.

Die Vorrichtung nutzt das Prinzip des Massenimpulserhaltungsgesetzes, um die Durchflussmenge des Fließmediums zu messen. Die Trägheit und der Widerstand des Fließmediums gegen eine Richtungsänderung erzeugen eine Impulskraft, die proportional zur Durchflussmenge ist. Diese Kraft bewirkt eine Auslenkung des Messkörpers 5 aus seiner Ruhelage, die als Maß für den Massendurchfluss dient.

Die Vorrichtung ist so konzipiert, dass sie eine direkte Messung des Massendurchflusses ermöglicht, ohne dass zusätzliche Messungen von Dichte, Viskosität oder Temperatur erforderlich sind. Dies führt zu einer verbesserten Genauigkeit und Effizienz bei der Messung der Durchflussmenge. Die Konstruktion der Vorrichtung minimiert zudem Druckverluste, da die Strömungswege innerhalb des Messbehälters 3 kurz und effizient gestaltet sind.

BEZUGSZEICHEN

| | |
|---|---|
| 100 | Messvorrichtung |
| 200 | Messvorrichtung |
| 300 | Messvorrichtung |
| 400 | Messvorrichtung |
| 3 | Messbehälter |
| 5 | Messkörper |
| 8 | Dichtring |
| 30 | Sichtfenster |
| 31 | Eingangsöffnung |
| 33 | Steg |
| 35 | Linearführung |
| 37 | Ausgleichsraum |
| 38 | Abdeckung |
| 39 | Ausgangsöffnung |
| 43 | Aufnahmeabschnitt |
| 45 | Ausgangsrohrabschnitt |
| 50 | Ringschulter |
| 51 | Ausgleichsöffnung |
| 52 | Schürze |
| 53 | Durchgangsöffnung, parallel zur Eingangsrichtung |
| 54 | Durchgangsöffnung, quer zur Abgaberichtung |
| 55 | Kolbenplatte |
| 56 | Membran |
| 57 | Membran |
| 59 | Rohrabschnitt |
| A | Abgaberichtung |
| E | Eingangsrichtung |

**Patentansprüche**

1. Vorrichtung (100, 200, 300, 400) zum Messen einer Durchflussmenge eines Fließmediums, umfassend

   einen geschlossenen Messbehälter (3), mit einer Eingangsöffnung (31), die eine Eingangsrichtung (E) für das Fließmedium definiert, und mit einer in einer Abgaberichtung (A) ausgerichteten Ausgangsöffnung (39) zum Abgeben des Fließmediums, einen Messkörper (5), der in der Abgaberichtung (A) linearbeweglich in dem Messbehälter (3) gelagert ist, und wobei das Fließmedium von der Eingangsöffnung (31) durch den Messkörper (5) zur Ausgangsöffnung (39) geführt wird und im Bereich des Messkörpers (5) eine Umlenkung von der Eingangsrichtung (E) zur Abgaberichtung (A) erfährt.

2. Vorrichtung (100, 200, 300, 400) nach Anspruch 1, wobei der Messbehälter (3) einen Ausgleichsraum (37) umfasst, der gegenüber zur Ausgangsöffnung (39) angeordnet ist, wobei der Messkörper (5) bei Auslenkung aus seiner Ruhelage in den Ausgleichsraum (37) hineinfährt.

3. Vorrichtung (100, 200, 300, 400) nach Anspruch 2, wobei der Ausgleichsraum (37) ist durch eine fest mit dem Messkörper (5) verbundene Barriere (55, 56, 57) von der Ausgangsöffnung (39) getrennt ist.

4. Vorrichtung (100, 200, 300, 400) nach Anspruch 3, wobei die Barriere eine in dem Messbehälter (3) geführte Kolbenplatte (55) umfasst.

5. Vorrichtung (200) nach Anspruch 3, wobei die Barriere wenigstens eine sich zwischen dem Messkörper (3) und dem Messbehälter (3) gehaltene Membran (56, 57) umfasst.

6. Vorrichtung (300) nach einem der vorstehenden Ansprüche, wobei der Messbehälter (3) eine rohrförmige Linearführung (35) für den Messkörper (5) aufweist.

7. Vorrichtung (100, 200, 300, 400) nach einem der vorstehenden Ansprüche, wobei der Messbehälter (3) ein Sichtfenster (30) zum Ablesen der Relativstellung des Messköpers (5) aufweist.

8. Vorrichtung (100, 200, 300, 400) nach einem der vorstehenden Ansprüche, wobei die Eingangsrichtung (E) senkrecht zur Ausgangsrichtung (A) ausgerichtet ist.

9. Vorrichtung (100, 200, 300, 400) nach einem der vorstehenden Ansprüche, wobei der Messkörper (5) einen Rohrabschnitt (59) aufweist, der fluchtend zur Ausgangsöffnung (39) ausgerichtet ist und/oder der wenigstens eine in quer zur Ausgangsrichtung (A), insbesondere in der Eingangsrichtung (E), orientierte Durchgangsöffnung (53, 54) aufweist.

10. Verfahren zum Messen einer Durchflussmenge eines Fließmediums, insbesondere mittels einer Vorrichtung nach einem der vorstehenden Ansprüche,

    wobei das Fließmedium durch eine Eingangsöffnung (31) in einer Eingangsrichtung (E) in einen Messbehälter (3) eintritt und den Messbehälter (3) durch eine Ausgangsöffnung (39) in einer Ausgangsrichtung (A) verlässt, wobei das Fließmedium durch einen Messkörper (5) zur Ausgangsöffnung (39) geführt wird und im Bereich des Messkörpers (5) eine Umlenkung von der Eingangsrichtung (E) zur Abgaberichtung (A) erfährt, wobei der Messkörper (5) eine zur Durchflussmenge des Fließmediums korrespondierende Auslenkung aus einer Ruhelage erfährt.

*Fig. 1*

**_Fig. 2_**

**Fig. 3**

*Fig. 4*

Europäisches
Patentamt
European
Patent Office
Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | SU 112 997 A1 (KOLYADA I A; YAKOVLEV L G) 30. November 1957 (1957-11-30) * Seiten 1-2; Abbildung * ----- | 1-3,5-10 | INV. G01F1/20 G01F1/80 |
| X,D | GB 904 017 A (ASS ELECT IND) 22. August 1962 (1962-08-22) * Seiten 1-2; Abbildung * ----- | 1-4,6-10 | |
| X,D | US 2 388 248 A (BIDWELL EARL E) 6. November 1945 (1945-11-06) * Seite 3, Zeile 49 - Seite 4, Zeile 10; Abbildungen 7-10 * ----- | 1-3,5,6, 8-10 | |

RECHERCHIERTE
SACHGEBIETE (IPC)

G01F
G01P

Der vorliegende Recherchenbericht wurde für alle Patentansprüche erstellt

| Recherchenort | Abschlußdatum der Recherche | Prüfer |
|---|---|---|
| Den Haag | 19. Mai 2026 | Myrillas, K |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 22 2947

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-05-2026

| Im Recherchenbericht angeführtes Patentdokument | Datum der Veröffentlichung | Mitglied(er) der Patentfamilie | Datum der Veröffentlichung |
|---|---|---|---|
| SU 112997 A1 | 30-11-1957 | KEINE | |
| GB 904017 A | 22-08-1962 | KEINE | |
| US 2388248 A | 06-11-1945 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 16666 A
- DE 4104937 A1
- US 2776567 A
- GB 506396 A
- GB 904017 A
- SU 112997 A1
- GB 1190912 A
- US 0701382 A
- US 3357244 A
- US 1039904 A
- US 2388248 A
- DE 2722239 B2
- DE 3723359 A1
- US 5024105 A